# EUROPÄISCHE PATENTSCHRIFT

(11) **EP 1 991 443 B1**
(45) Veröffentlichungstag und Bekanntmachung des Hinweises auf die Patenterteilung: **11.07.2012**
(21) Anmeldenummer: 07711805.7
(22) Anmeldetag: 06.03.2007
(51) Int. Cl.: H01Q 1/12, B60S 1/08, H04N 5/247, B60R 11/04, H01Q 1/32, G02B 7/00, H05B 3/84

(54) **KAMERAANORDNUNG FÜR EIN KRAFTFAHRZEUG**
CAMERA ARRANGEMENT FOR A MOTOR VEHICLE
ENSEMBLE CAMÉRA POUR VÉHICULE À MOTEUR

(30) Priorität: 08.03.2006 DE 102006010672
(43) Veröffentlichungstag der Anmeldung: 19.11.2008
(73) Patentinhaber: Leopold Kostal GmbH & Co. KG, 58507 Lüdenscheid (DE)
(72) Erfinder: BLÄSING, Frank, 59457 Werl (DE); BÖBEL, Ralf, 59439 Holzwickede (DE); BÖHNE, Gregor, 44575 Castrop-rauxel (DE); RICHWIN, Matthias, 44289 Dortmund (DE); WEBER, Thomas, 58513 Lüdenscheid (DE)
(86) Internationale Anmeldenummer: PCT/EP2007/001898
(87) Internationale Veröffentlichungsnummer: WO 2007/101650

(56) Entgegenhaltungen:
- EP-A2- 0 934 851
- WO-A-2005/113293
- DE-A1- 10 340 901
- DE-A1- 10 342 837
- DE-A1- 10 355 205
- DE-A1-102004 018 215
- DE-A1-102004 057 322

## Beschreibung

Die vorliegende Erfindung betrifft eine Kameraanordnung für ein Kraftfahrzeug, mit einer auf eine Fahrzeugscheibe gerichteten Kamera und mit mindestens einer elektrischen Leiterstruktur, die direkt oder indirekt mit der Fahrzeugscheibe verbunden ist.

Bei modernen Kraftfahrzeugen werden eine Vielzahl von Sensoren eingesetzt, die, um Informationen aus dem Außenraum des Kraftfahrzeugs zu erfassen, einen Anbauort an einer Fahrzeugscheibe und zwar zumeist speziell der Windschutzscheibe finden müssen. Dies gilt besonders für bilderfassende Kamerasysteme. Aber auch Regensensoren, Beschlagssensoren und sonstige optischen Sensoren, wie beispielsweise Sonnen- oder Umgebungslichtsensoren, werden vorwiegend an der Windschutzscheibe angeordnet.

Aus der deutschen Patentanmeldung DE 103 40 901 A1 ist ein Dachmodul für ein Kraftfahrzeug bekannt, welches in einer speziellen Ausführungsform eine Kamera aufweist. Des weiteren gehört zu dem Dachmodul wenigstens ein weiteres mechanisches oder elektrisches Bauteil, welches beispielsweise einen Regensensor, einen lichtempfindlichen Sensor oder einen Temperatursensor ausbilden kann. Die Kamera und das Bauteil sind beide im Bereich der Windschutzscheibe angeordnet.

Die europäische Patentanmeldung EP 0 934 851 A2 zeigt eine optische Sensorvorrichtung für Kraftfahrzeug gemäβß den Oberbegriff des Patentanspruchs 1, die hinter einer Scheibe des Kraftfahrzeugs von der Fahrzeugumgebung abgegrenzt angeordnet ist. Die Fahrzeugscheibe weist im Durchtrittsbereich der auf die Optik gerichteten Strahlung eine Schicht mit variabler Lichtdurchlässigkeit auf, die elektrisch beeinflussbar ist und die über transparente Elektroden, zwischen denen sich ein transparenter Elektrolyt und eine aktive Polymerschicht befindet, steuerbar ist.

Die DE 10 2004 018 A1 beschreibt eine Scheibenanordnung mit aufgebrachten elektrischen Leitern und ein Verfahren zur Herstellung einer derartigen Scheibenanordnung. Die elektrischen Leiter bedecken relativ große Flächenteile der Fahrzeugscheibe. Eine Kameraanordnung ist in dieser Patentanmeldung nicht offenbart.

In der internationalen Veröffentlichung WO 2005/113293 ist eine Kamera beschrieben, die über einen Lichtleitkörpers mit einer Fahrzeugscheibe verbunden ist.

Kapazitiv messende Sensoren, die oftmals Feuchtigkeitssensoren ausbilden, einerseits und Kamerasysteme andererseits werden aufgrund ihrer unterschiedlichen Meßprinzipien üblicherweise als separate Bauelemente ausgeführt, die an unterschiedlichen Stellen der Windschutzscheibe angeordnet werden. Hierdurch ergibt sich eine großflächige Belegung der Windschutzscheibe mit elektronischen Bauelementen und speziell mit elektronischer Sensorik, die sowohl aus ästhetischen, als auch aus praktischen Gründen als nachteilig angesehen wird.

Grundsätzlich kann natürlich vorgesehen werden, eine Kamera und einen Feuchtigkeitssensor innerhalb eines gemeinsamen Gehäuses anzuordnen. Da dabei aber der optische Sensor weiterhin neben dem elektrischen Sensor angeordnet ist, bleibt das Problem des benötigten großen Anbauraums weiterhin bestehen. Dieses Problem ergibt sich analog bei einer Anbringung mehrerer Sensoren an einer der anderen Fahrzeugscheiben.

Es stellte sich die Aufgabe, eine einfache und kostengünstige Kameraanordnung für ein Kraftfahrzeug, mit einer auf eine Fahrzeugscheibe gerichteten Kamera und mit mindestens einer an der Fahrzeugscheibe angeordneten elektrischen Leiterstruktur zu schafffen, die ihren Anbauplatz an einer Fahrzeugscheibe möglichst vorteilhaft ausnutzt.

Diese Aufgabe wird erfindungsgemäß dadurch gelöst, daß die Leiterstruktur mindestens einen Draht oder eine Leiterbahn aufweist oder als eine Leiterschleife ausgebildet ist, daß die Kamera über einen Lichtleitkörper mit der Fahrzeugscheibe verbunden ist, und daß die Leiterstruktur im Erfassungsbereich der Kamera und vollständig innerhalb der durch den Lichtleitkörper an der Fahrzeugscheibe abgedeckten Fläche angeordnet ist.

Die der Erfindung zugrundeliegende Idee besteht darin, den Bereich der Fahrzeugscheibe, über die die Kamera ein Bild des Außenraums erfaßt, zugleich für eine andere Anwendung nutzbar zu machen. Unter der Voraussetzung, daß die Leiterstruktur nur einen Teil des Erfassungsbereiches der Kamera ausfüllt, kann die Leiterstruktur so an der Fahrzeugscheibe angeordnet sein, daß die Kamera durch sie hindurchblickt.

Unter dem Begriff "Leiterstruktur" sind hierbei insbesondere geometrische Anordnungen aus einem leitfähigen Material gemeint, die an oder in einer Fahrzeugscheibe angebracht sein können. Eine solche Leiterbahnstruktur kann speziell durch Drähte oder Leiterbahnen gebildet sein. Neben einfachen Leiterschleifen können diese Strukturen vorteilhafterweise auch komplexe geometrische Muster ausbilden, wie zum Beispiel Mäander oder Spiralen. Die Leiterstruktur kann dabei auch mehrteilig ausgebildet sein oder auch galvanisch voneinander getrennte Teilstrukturen ausbilden, wie zum Beispiel eine kapazitiv wirkende Interdigitalstruktur.

Besonders vorteilhaft ist, wenn die Leiterstruktur ein elektrisches oder elektronisches Bauteil ausbildet, beispielsweise eine Antenne, eine Spule oder einen Kondensator.

Das Bauteil kann dabei ein Sensor oder ein Teil eines Sensors sein. In einer bevorzugten Ausführung kann der Sensor ein nach einem kapazitiven Meßprinzip funktionierender Feuchtigkeitssensor sein, der zur Detektion von Regen oder Beschlagbildung auf der Fahrzeugscheibe vorgesehen sein kann.

Das Wirkprinzip kapazitiver Regensensoren beruht darauf, daß Wasser von Luft abweichende dielektrische Eigenschaften aufweist und so beim Einbringen in ein elektrisches oder elektromagnetisches Feld dieses in meßbarer Weise beeinflußt, so daß Feuchtigkeit auf einer Fahrzeugscheibe beispielsweise dadurch detektiert werden kann, daß beim Auftreffen des Wassers sich die Kapazität eines in oder an der Fahrzeugscheibe befestigten Streufeldkondensators dergestalt verändert, daß ein angeschlossener Schwingkreis eine Frequenzänderung erfährt.

Ebenso können auch Antennenstrukturen in oder an der Fahrzeugscheibe angebracht sein. In beiden Fälle können diese Leiterstrukturen je nach Herstellungsverfahren sehr geringe Strukturbreiten aufweisen oder nahezu transparent sein.

Die Leiterstruktur kann auch vorteilhaft eine Heizvorrichtung ausbilden, die eine die Funktion der Kameraanordnung störende Beschlagbildung auf der Fahrzeugscheibe beseitigen kann.

Weiterhin können zu einer Leiterstruktur auch kleinbauende, diskrete elektrische oder elektronische Bauelemente oder ungehäuste elektronische Schaltkreise gehören.

Vorteilhaft ist weiterhin, wenn die Leiterstruktur teiltransparent ausgebildet ist, also lichtdurchlässige Bereiche aufweist. Ebenfalls vorteilhaft ist, wenn die Leiterstruktur auf einem transparenten Träger, etwa einer durchsichtigen Folie, angeordnet ist.

Die Leiterstruktur kann auf der Innenseite der Fahrzeugscheibe oder auch zwischen zwei Glasflächen einer Verbundglasscheibe angebracht sein.

Weiterhin kann die Leiterstruktur auch mit der Kamera oder mit einem optischen Element, beispielsweise einem Prisma oder einem Lichtleiter, vor der Kamera verbunden sein. Hierdurch wird es möglich aus der Leiterstruktur und der Kamera ein vormontierbares Modul zu bilden, welches eine gemeinsame Montage von Kamera und Leiterstruktur an der Fahrzeugscheibe ermöglicht, und zudem eine Austauschbarkeit von Kameramodul und Fahrzeugscheibe unabhängig voneinander erlaubt. Das optische Element kann dabei insbesondere als Tubus ausgeführt sein, der mit einem optischen Material gefüllt ist.

Des weiteren ist es vorteilhaft, wenn die Kamera auf eine möglichst weite Entfernung und vorzugsweise ins Unendliche fokussiert ist. Da so die Scharfeinstellung nicht auf die Ebene der Fahrzeugscheibe erfolgt, behindert eine in der Scheibenebene angeordnete Leiterstruktur die Bilderfassung nicht in relevanter Weise.

Die Kamera kann vorteilhaft sowohl für bilderfassende Funktionen, beispielsweise zur Realisierung einer Fahrspurerkennung, als auch für nicht bilderfassende Funktionen, wie etwa eine Lichtsensorfunktion vorgesehen sein, bei der lediglich eine, insbesondere ortsaufgelöste, Helligkeitsinformation erfaßt wird.

Den grundlegende Aufbau der erfindungsgemäßen Kameraanordnung zeigt die Zeichnung anhand von zwei skizzenhaften Schnittdarstellungen.

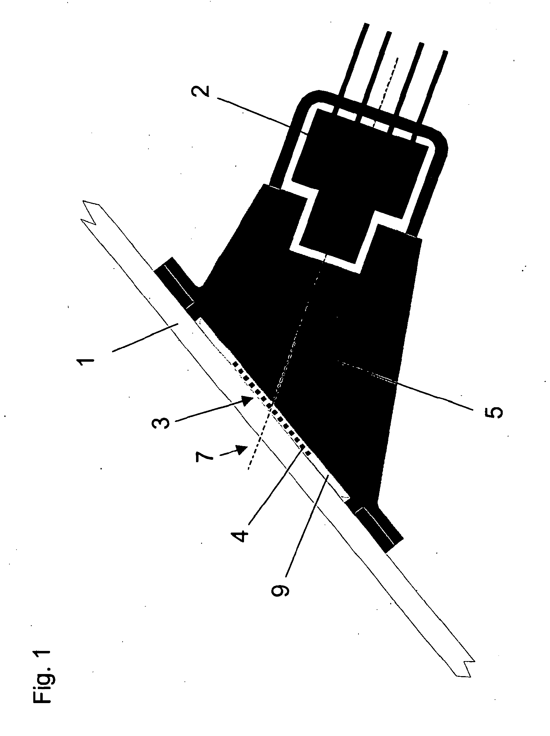

Die Figur 1 zeigt eine Fahrzeugscheibe (1), und zwar insbesondere die Windschutzscheibe eines Kraftfahrzeugs, an deren Innenseite eine äußere Fläche eines Lichtleitkörpers (5) angekoppelt ist. Mit dem der Fläche entgegengesetzten Abschnitt des Lichtleitkörpers (5) ist eine Kamera (2) verbunden. Vorteilhafterweise können hierbei in einer hier nicht dargestellten Weise Teile des Lichtleitkörpers (5) einstückig Teile der Kameraoptik ausbilden.

Der Lichtleitkörper (5) ist aus einem Material hergestellt, das den gleichen oder einen ähnlichen Brechungsindex wie die Fahrzeugscheibe (1) aufweist, und daher einen nahezu brechungsfreien Strahlengang von der Fahrzeugscheibe (1) zum Lichtleitkörper (5) und zur Kamera (2) ermöglicht. Der hier nur schematisch dargestellte Lichtleitkörper (5) kann durch einen festen Prismenkörper gebildet sein oder auch durch einen Tubus, der mit einem optisch transparenten Material gefüllt ist. Vorteilhaft ist in jedem Fall, zur Vermeidung von Streulichteinflüssen die Seitenflächen des Lichtleitkörpers (5), etwa durch eine Schwarzfärbung, lichtundurchlässig auszuführen.

In Blickrichtung, also in Richtung der optischen Achse (7) der Kamera (2) ist im Bereich der Fahrzeugscheibe (1) eine teiltransparente Leiterstruktur (3) auf einem transparenten Träger (9) angebracht oder in den Träger (9) eingeformt. Die Leiterstruktur (3) erfüllt, zusammen mit einer nicht dargestellten Schaltungsanordnung beispielweise die Funktion eines Feuchtigkeitssensors. In der Schnittdarstellung sind Schnittlinien durch die Leiterbahnen (4) der Leiterstruktur (3) erkennbar, die sich in einer Draufsicht bei einem induktiven Sensor beispielsweise als Spirale und bei einem kapazitiven Sensor als Interdigitalstruktur darstellen würde.

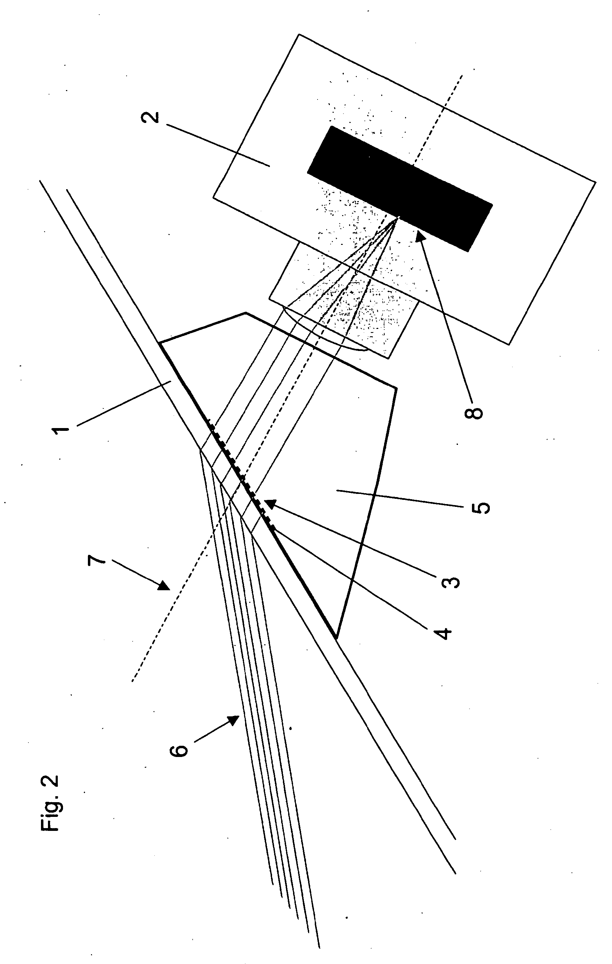

Die Figur 2 verdeutlicht in einer schematischen Darstellung den Strahlengang einer bilderfassenden Kameraanordnung. Die Kamera (2) ist auf eine große Entfernung, vorzugsweise ins Unendliche fokussiert. Dies bedeutet, daß ein parallel auf die Fahrzeugscheibe (1) auftreffendes Lichtbündel (6) jeweils auf einen einzigen Punkt in der Abbildungsebene (8) der Kamera (2) abgebildet wird, wobei die Lage des Bildpunktes in der Abbildungsebene (8) mit dem Einfallswinkel des Lichtbündels (6) auf die Fahrzeugscheibe (1) variiert.

Aufgrund der Fokussierung ins Unendliche wird die in oder in der Nähe der Fahrzeugscheibenebene angeordnete Leiterstruktur (3) nicht von der Kamera (2) abgebildet, sondern statt dessen von der Kamera (2) durchblickt.

Wie die Figur 2 zeigt, verhindern die undurchsichtigen Leiterbahnen (4) innerhalb der teiltransparenten Leiterstruktur (3), daß einzelne Lichtstrahlen des parallel einfallenden Lichtbündels (6) bis zur Kamera (2) gelangen können, wodurch sich die Intensität des von der Kamera (2) erfaßten Bildes etwas vermindert. Darüber hinaus können sich leichte Beugungseffekte an den Rändern der die Leiterstruktur (3) bildenden Drähten oder Leiterbahnen (4) ergeben, die aber in ihrer Auswirkung auf die Bilderfassung vernachlässigbar sind. Auch das Material des, in der Figur 1 übertrieben dick dargestellten Trägers (9) hat mit seinem Brechungsindex keinen wesentlichen Einfluß auf den Strahlengang, da der Lichtweg durch das Trägermaterial vergleichsweise kurz ist.

Insgesamt sieht somit die Kamera (2) durch die in ihrem Blickfeld angeordnete Leiterstruktur (3) einfach hindurch, ohne daß sich durch die Leiterstruktur (3) eine relevante Beeinträchtigung der Bildererfassung durch die Kamera (2) ergibt.

### Bezugszeichen

- 1: Fahrzeugscheibe
- 2: Kamera
- 3: Leiterstruktur
- 4: Leiterbahnen
- 5: Lichtleitkörper
- 6: Lichtbündel
- 7: optische Achse
- 8: Abbildungsebene
- 9: Träger

## Patentansprüche

1. Kameraanordnung für ein Kraftfahrzeug, mit einer auf eine Fahrzeugscheibe gerichteten Kamera und mit mindestens einer elektrischen Leiterstruktur, die direkt oder indirekt mit der Fahrzeugscheibe verbunden ist,
**dadurch gekennzeichnet,**
**daß** die Leiterstruktur (3) mindestens einen Draht oder eine Leiterbahn (4) aufweist oder als eine Leiterschleife ausgebildet ist,
**daß** die Kamera (2) über einen Lichtleitkörper (5) mit der Fahrzeugscheibe (1) verbunden ist, und
**daß** die Leiterstruktur (3) an der Fahrzeugscheibe (1) im Erfassungsbereich der Kamera (2) und vollständig innerhalb der durch den Lichtleitkörper (5) an der Fahrzeugscheibe (1) abgedeckten Fläche angeordnet ist.

2. Kameraanordnung nach Anspruch 1, **dadurch gekennzeichnet, daß** die Drähte oder Leiterbahnen (4) auf einem, vorzugsweise transparenten, Träger (9) angeordnet sind.

3. Kameraanordnung nach einem der vorgenannten Ansprüche, **dadurch gekennzeichnet, daß** die Leiterstruktur (3) aus mehreren galvanisch getrennten Teilstrukturen besteht.

4. Kameraanordnung nach einem der vorgenannten Ansprüche **dadurch gekennzeichnet, daß** die Leiterstruktur (3) ein geometrisches Muster ausbildet und zwar vorzugsweise eine Spiral-, Mäander- oder Interdigitalanordnung.

5. Kameraanordnung nach einem der vorgenannten Ansprüche, **dadurch gekennzeichnet, daß** die Leiterstruktur (3) ein elektronisches Bauteil, insbesondere eine Spule, einen Kondensator oder eine Antenne ausbildet.

6. Kameraanordnung nach einem der vorgenannten Ansprüche, **dadurch gekennzeichnet, daß** die Leiterstruktur (3) teiltransparent ist.

7. Kameraanordnung nach Anspruch 1, **dadurch gekennzeichnet, daß** die Leiterstruktur (3) ein diskretes elektronisches Bauteil oder eine Heizvorrichtung beinhaltet.

8. Kameraanordnung nach Anspruch 1, **dadurch gekennzeichnet, daß** die Leiterstruktur (3) auf der Innenseite der Fahrzeugscheibe (1) oder zwischen zwei Glasflächen einer Verbundglasscheibe angeordnet ist.

9. Kameraanordnung nach Anspruch 1, **dadurch gekennzeichnet, daß** die Leiterstruktur (3) mit dem Lichtleitkörper (5) verbunden ist.

10. Kameraanordnung nach Anspruch 1, **dadurch gekennzeichnet, daß** die Leiterstruktur (3) einen Feuchtigkeitssensor ausbildet.

11. Kameraanordnung nach Anspruch 10, **dadurch gekennzeichnet, daß** der Feuchtigkeitssensor nach einem kapazitiven Meßprinzip funktioniert.

12. Kameraanordnung nach Anspruch 1, **dadurch gekennzeichnet, daß** die Kamera (2) auf eine Ebene fokussiert ist, die außerhalb des Kraftfahrzeugs liegt.

13. Kameraanordnung nach Anspruch 1, **dadurch gekennzeichnet, daß** zwischen Kamera (2) und Fahrzeugscheibe (1) ein Tubus angeordnet ist.

14. Kameraanordnung nach Anspruch 1, **dadurch gekennzeichnet, daß** die Kamera (2) eine bilderfassende Funktion aufweist.

15. Kameraanordnung nach Anspruch 14, **dadurch gekennzeichnet, daß** die Kamera (2) zusätzlich wenigstens eine nicht bilderfassende Funktion aufweist, wobei die nicht bilderfassende Funktion eine Umgebungslichtsensor- oder Sonnensensor- oder Regensensor- oder Beschlagssensorfunktion ist.

## Claims

1. Camera configuration for a motor vehicle, having a camera directed at a window pane of the motor vehicle and having at least one electrical conductive structure which is directly or indirectly connected to the window pane of the motor vehicle
**characterised in that**
the conductive structure (3) has at least one wire or one printed conductor (4) or is designed as a conductor loop,
that the camera (2) is connected to the window pane (1) of the motor vehicle by way of a light-guide element (5), and
that the conductive structure (3) is located on the window pane of the vehicle (1) within the detection range of the camera (2) and completely within the area covered by the light-guide element (5) on the window pane (1) of the motor vehicle.

2. Camera configuration according to Claim 1, **characterised in that** the wires or printed conductors (4) are arranged on a, preferably transparent, carrier (9).

3. Camera configuration according to either of the previous claims, **characterised in that** the conductive structure (3) comprises several electrically isolated sub-structures.

4. Camera configuration according to any of the previous claims, **characterised in that** the conductive structure (3) forms a geometric pattern, namely preferably a spiral, meandering or inter-digital arrangement.

5. Camera configuration according to any of the previous claims, **characterised in that** the conductive structure (3) constitutes an electronic component, in particular a coil, a capacitor or an aerial.

6. Camera configuration according to any of the previous claims, **characterised in that** the conductive structure (3) is semi-transparent.

7. Camera configuration according to Claim 1, **characterised in that** the conductive structure (3) incorporates a discrete electronic component or a heating facility.

8. Camera configuration according to Claim 1, **characterised in that** the conductive structure (3) is located on the inside of the window pane (1) of the motor vehicle or between two glass surfaces of a laminated pane of glass.

9. Camera configuration according to Claim 1, **characterised in that** the conductive structure (3) is connected to the light-guide element (5).

10. Camera configuration according to Claim 1, **characterised in that** the conductive structure (3) constitutes a humidity sensor.

11. Camera configuration according to Claim 10, **characterised in that** the humidity sensor functions according to a capacitive measuring principle.

12. Camera configuration according to Claim 1, **characterised in that** the camera (2) is focused on a plane which lies outside the motor vehicle.

13. Camera configuration according to Claim 1, **characterised in that** a lens tube is arranged between the camera (2) and the window pane (1) of the motor vehicle.

14. Camera configuration according to Claim 1, **characterised in that** the camera (2) has an image-capturing function.

15. Camera configuration according to Claim 14, **characterised in that** the camera (2) additionally has at least one non-image-capturing function, the non-image-capturing function being an ambient light sensor or sunshine sensor or rain sensor or condensation sensor function.

## Revendications

1. Arrangement de caméra pour un véhicule automobile, avec une caméra, qui est dirigée sur une vitre dudit véhicule automobile, et avec au moins une structure conductrice d'électricité, qui est reliée, directement ou indirectement, à une vitre du véhicule automobile,
**caractérisé en ce que**
la structure conductrice (3) présente au moins un fil ou une piste conductrice (4) ou est réalisée sous la forme d'une boucle conductrice,
la caméra (2) est reliée à la vitre (1) du véhicule automobile par l'intermédiaire d'un corps conducteur d'électricité (5), et
que la structure conductrice (3) est agencée sur la vitre (1) du véhicule automobile, dans la zone de détection de la caméra (2), et est complètement disposée au sein de la surface, qui est recouverte par le corps conducteur (5), sur la vitre (1) du véhicule automobile.

2. Arrangement de caméra selon la revendication 1, **caractérisé en ce que** les fils ou les pistes conductrices (4) sont disposés sur un support (9), de préférence transparent.

3. Arrangement de caméra selon l'une des revendications précédentes, **caractérisé en ce que** la structure conductrice (3) consiste en plusieurs structures partielles, qui sont séparées au niveau galvanique.

4. Arrangement de caméra selon l'une des revendications précédentes, **caractérisé en ce que** la structure conductrice (3) forme un motif géométrique, celui-ci étant de préférence un agencement en forme de spirale, en forme de méandre ou interdigital.

5. Arrangement de caméra selon l'une des revendications précédentes, **caractérisé en ce que** la structure conductrice (3) forme un composant, en particulier une bobine, un condensateur ou une antenne.

6. Arrangement de caméra selon l'une des revendications précédentes, **caractérisé en ce que** la structure conductrice (3) est partiellement transparente.

7. Arrangement de caméra selon la revendication 1, **caractérisé en ce que** la structure conductrice (3) contient un composant électronique discret ou un dispositif de chauffage.

8. Arrangement de caméra selon la revendication 1, **caractérisé en ce que** la structure conductrice (3) est disposée sur la face intérieure de la vitre (1) du véhicule automobile ou entre deux surfaces de verre d'une vitre en verre feuilleté.

9. Arrangement de caméra selon la revendication 1, **caractérisé en ce que** la structure conductrice (3) est reliée au corps conducteur (5).

10. Arrangement de caméra selon la revendication 1, **caractérisé en ce que** la structure conductrice (3) forme un détecteur d'humidité.

11. Arrangement de caméra selon la revendication 10, **caractérisé en ce que** le détecteur d'humidité fonctionne selon une méthode de mesure capacitive.

12. Arrangement de caméra selon la revendication 1, **caractérisé en ce que** la caméra (2) est focalisée sur un plan, qui est situé en dehors du véhicule automobile.

13. Arrangement de caméra selon la revendication 1, **caractérisé en ce qu'**un tube est disposé entre la caméra (2) et la vitre (1) du véhicule automobile.

14. Arrangement de caméra selon la revendication 1, **caractérisé en ce que** la caméra (2) est dotée d'une fonction de capture d'image.

15. Arrangement de caméra selon la revendication 14, **caractérisé en ce que** la caméra (2) est dotée, d'au moins une fonction supplémentaire, autre qu'une fonction de capture d'image, sachant que ladite fonction autre qu'une fonction de capture d'image, est une fonction de détecteur de lumière ambiante ou de détecteur de soleil ou de détecteur de pluie ou de détecteur de buée.
